# EUROPÄISCHE PATENTSCHRIFT

(11) **EP 0 891 832 B1**
(45) Veröffentlichungstag und Bekanntmachung des Hinweises auf die Patenterteilung: **11.04.2001**
(21) Anmeldenummer: 98110222.1
(22) Anmeldetag: 04.06.1998
(51) Int. Cl.: B23B 51/00, B23B 51/02

(54) **Bohrer**
Drill
Foret

(30) Priorität: 17.07.1997 DE 19730665
(43) Veröffentlichungstag der Anmeldung: 20.01.1999
(73) Patentinhaber: fischerwerke Artur Fischer GmbH & Co. KG, 72178 Waldachtal (DE)
(72) Erfinder: Gallatz, Armin, 72186 Empfingen (DE)

(56) Entgegenhaltungen:
- EP-A- 0 385 059
- EP-A- 0 642 864
- FR-A- 324 829
- FR-A- 2 268 590
- US-A- 3 776 656

## Beschreibung

Die Erfindung betrifft einen Steinbohrer mit den Merkmalen des Oberbegriffs des Anspruchs 1.

Bekannte Steinbohrer weisen einen Bohrerschaft mit wendelförmig umlaufenden Bohrmehlnuten und einer Hartmetallplatte auf, die in einen Querschlitz in einem vorderen Ende des Bohrerhalters eingesetzt und beispielsweise durch Hartlöten befestigt ist. Aus der EP 0 385 059 Nächstliegender Stand der Technik B1 ist ein Steinbohrer zur Herstellung von Bohrlöchern mit Hinterschneidung bekannt. Bei dem bekannten Bohrer steht die Hartmetallplatte seitlich über dem Bohrerschaft über. Im Anschluß an die Hartmetallplatte weist der Bohrerschaft eine sich in Längsrichtung des Bohrers erstreckende Verjüngung auf, die dazu dient, einen Freiraum zwischen Bohrerschaft und einem zylindrischen Bohrloch zu schaffen, der ein Verschwenken des Bohrers im Bohrloch, also ein seitliches Auslenken des mit der Hartmetallplatte versehenen vorderen Ende des Bohrers, ermöglicht. Das Auslenken dient dem Ausreiben der Hinterschneidung im Bohrloch.

Die Verjüngung des Bohrerschaftes bewirkt eine Querschnittsschwächung. Ebenso bewirkt der Querschlitz für die Hartmetallplatte im Bohrerschaft eine Querschnittsschwächung des Bohrerschaftes. Diese Querschnittsschwächungen führen dazu, daß der Bohrer oftmals bereits nach der Herstellung einer relativ geringen Anzahl von Bohrlöchern im Bereich eines Grundes des Querschlitzes bricht, d.h. seine Standzeit ist kurz. Insbesondere wenn der Bohrer auf ein Armiereisen oder dgl. trifft, kann es sehr schnell zum Bruch des Bohrers kommen. Dieses Problem wird verstärkt durch die zusätzliche seitliche Beanspruchung des Bohrers beim Ausreiben der Hinterschneidung. Ein derartiger Bruch tritt allerdings auch bei Steinbohrern auf, die zum Bohren zylindrischer Bohrlöcher ohne Hinterschneidung dienen und die einen im wesentlichen zylindrischen Bohrerschaft ohne Verjüngung hinter der Hartmetallplatte aufweisen. Die Erfindung bezieht sich daher generell auf Bohrer, die mit einer Hartmetallplatte bestückt sind und ist nicht beschränkt auf Bohrer zur Herstellung von Bohrlöchern mit Hinterschneidung. Unter Bohrer sollen auch bohrerähnliche Werkzeuge zum Herstellen einer Hinterschneidung in einem anderweitig hergestellten Bohrloch verstanden werden, also Werkzeuge, mit denen nur die Hinterschneidung, nicht jedoch der zylindrische Teil des Bohrlochs gefertigt wird.

Aus der FR-A-324 829 ist ein Metallbohrer bekannt, der einen Bohrerschaft mit einem Querschlitz in seinem vorderen Ende aufweist, in den eine Wechselschneidplatte eingesetzt ist. Ein hinterer Rand der Wechselschneidplatte ist pfeilförmig abgewinkelt komplementär zum Verlauf eines Grundes des Querschlitzes. Dies dient der Selbstzentrierung der Wechselschneidplatte am Bohrerschaft durch den beim Bohren auftretenden Druck. Dieser Metallbohrer ist gattungsfremd und der Halt der Wechselschneidplatte im Querschlitz des Bohrerschaftes ist bei weitem nicht ausreichend für die beim Bohren in Stein auftretenden Schlagbeanspruchungen.

Der Erfindung liegt die Aufgabe zugrunde, einen Steinbohrer der Eingangs genannten Art so weiter zu bilden, daß seine Standzeit erhöht ist.

Diese Aufgabe wird erfindungsgemäß durch die Merkmale des Anspruchs 1 gelöst. Beim erfindungsgemäßen Steinbohrer verläuft ein Grund des Querschlitzes im vorderen Ende des Bohrerschaftes, in den die Hartmetallplatte eingesetzt ist, konvex. Dies bedeutet, der Grund des Querschlitzes verläuft von einer Seite des Bohrerschaftes schräg oder geschwungen nach vorn in Richtung des vorderen Endes des Bohrerschaftes und nach innen zur Mitte des Bohrerschaftes. Ein hinterer Rand der Hartmetallplatte ist komplementär zum Grund des Querschlitzes, also konkav geformt. Die Begriffe konvex und konkav sollen nicht ausschließlich gerundete oder gebogene Verläufe bezeichnen, sie sollen beispielsweise auch eckige Verläufe einbeziehen.

Infolge des konvexen Verlaufs des Grundes des Querschlitzes verändert sich der Querschnitt des Bohrerschaftes nicht schlagartig, sondern kontinuierlich über einen axialen Bereich des Bohrerschaftes. Dadurch wird eine örtliche verteilte Beanspruchung des Bohrerschaftes beim Bohren und beim Ausreiben der Hinterschneidung erreicht, Spannüngsspitzen im Bereich des Grundes des Querschlitzes und ein Bruch des Bohrerschaftes werden vermieden. Die Standzeit des erfindungsgemäßen Steinbohrers verlängert sich auf ein Vielfaches.

Zum Bohren in Stein, Beton oder dgl. wird der Bohrer rotierend angetrieben und zugleich mittes eines Schlagwerkzeugs mit Schlägen in axialer Richtung beaufschlagt. Diese Schläge werden vom Bohrerschaft auf die Hartmetallplatte übertragen. Um einen großen Teil der Kraft vom Bohrerschaft auf die Hartmetallplatte als Normalkraft vom Grund des Querschlitzes auf den hinteren Rand der Hartmetallplatte übertragen zu können, weist eine Ausgestaltung der Erfindung einen in etwa quer zum Bohrerschaft verlaufenden mittleren Abschnitt des Grundes des Querschlitzes und des hinteren Randes der Hartmetallplatte auf. Dies bedeutet, der mittlere Abschnitt des Grundes des Querschlitzes und des hinteren Randes der Hartmetallplatte verlaufen in einer Radialebene oder in einem kleinen Winkel zur Radialebene des Bohrerschaftes. Seitlich außerhalb dieses mittleren Abschnitts verläuft der Grund des Querschlitzes und des hinteren Randes der Hartmetallplatte mehr in axialer Richtung des Bohrerschaftes, vorzugsweise schräg oder bogenförmig in Richtung eines hinteren Bohrerendes zum Umfang des Bohrerschaftes. Diese Seitenabschnitte des Grundes des Querschlitzes und des hinteren Randes der Hartmetallplatte verbessern den Halt der Hartmetallplatte in seitlicher Richtung, also beim Herstellen der Hinterschneidung, und steigern auf diese Weise die Belastbarkeit des erfindungsgemäßen Steinbohrers.

Günstige Formen für den Grund des Querschlitzes im Bohrerschaft und den hinteren Rand der Hartmetallplatte sind beispielsweise eine Halbellipse oder ein Halboval mit der großen Halbachse in Radialrichtung des Bohrerschaftes oder diesen angenäherte Formen. Solche Formen haben den Vorteil einer guten Belastungsverteilung und damit geringer örtlicher Beanspruchung des Bohrers. Zudem lassen sich Hartmetallplatten, deren hinterer Rand konkav ist und die Form einer Halbellipse, eines Halbovals oder eine ähnliche Form aufweist, gut herstellen.

Bei einer Ausgestaltung der Erfindung weisen der Grund des Querschlitzes im Bohrerschaft und der hintere Rand der Hartmetallplatte in etwa die Form eines Trapezes oder eines Poligonzuges auf. Um hier eine Rißbildung ausgehend von den Ecken des Trapezes oder des Poligonzuges zu vermeiden, sind diese Ecken vorzugsweise gerundet.

Um eine Hinterschneidung in einem Bohrloch herstellen zu können, steht die Hartmetallplatte bei einer bevorzugten Ausgestaltung der Erfindung seitlich über den Bohrerschaft über.

Bei einer Weiterbildung dieser Ausgestaltung der Erfindung weist der Bohrerschaft eine Ausbauchung oder dgl. auf, die mit axialem Abstand vom vorderen Ende des Bohrerschaftes am Bohrerschaft angeordnet ist. Diese Ausbauchung oder dgl. bildet ein Schwenklager, mit dem sich der Bohrer an einer Bohrlochwand abstützt. Dieses Schwenklager ermöglicht ein seitliches Verschwenken des Bohrers und somit ein seitliches Auslenken der Hartmetallplatte zur Herstellung der Hinterschneidung nach Bohren des zylindrischen Teils des Bohrlochs.

Um einen den Bohrerschaft umgebenden Freiraum zum seitlichen Verschwenken des Bohrers zu schaffen, weist der Bohrerschaft eine Verjüngung im Anschluß an den Querschlitz mit der Hartmetallplatte auf, die in Richtung der Ausbauchung oder dgl. verläuft. Die Ausbauchung oder dgl. hat in etwa denselben Durchmesser wie eine größte Breite der Hartmetallplatte quer zum Bohrerschaft, um den Bohrerschaft mit der Ausbauchung oder dgl. in den zylindrischen Teil eines Bohrlochs einführen zu können, der mit der Hartmetallplatte gebohrt ist und in etwa die Breite der Hartmetallplatte als Durchmesser aufweist.

Bei einer Weiterbildung der Erfindung weist der Bohrerschaft einen seitlich abstehenden Tiefenanschlag beispielsweise in Form eines radial abstehenden Bundes auf. Dieser Tiefenanschlag begrenzt die Bohrlochtiefe und bildet eine Abstützung beim Verschwenken des Bohrers im Bohrloch zum Herstellen der Hinterschneidung.

Die Erfindung wird nachfolgend anhand zweier in der Zeichnung dargestellter Ausführungsbeispiele näher erläutert. Es zeigen:
- Figur 1: eine erste Ausgestaltung eines erfindungsgemäßen Bohrers;
- Figur 2: eine Hartmetallplatte des Bohrers aus Figur 1;
- Figur 3: einen Schnitt entlang Linie III-III in Figur 2;
- Figur 4: eine zweite Ausführungsform eines erfindungsgemäßen Bohrers.

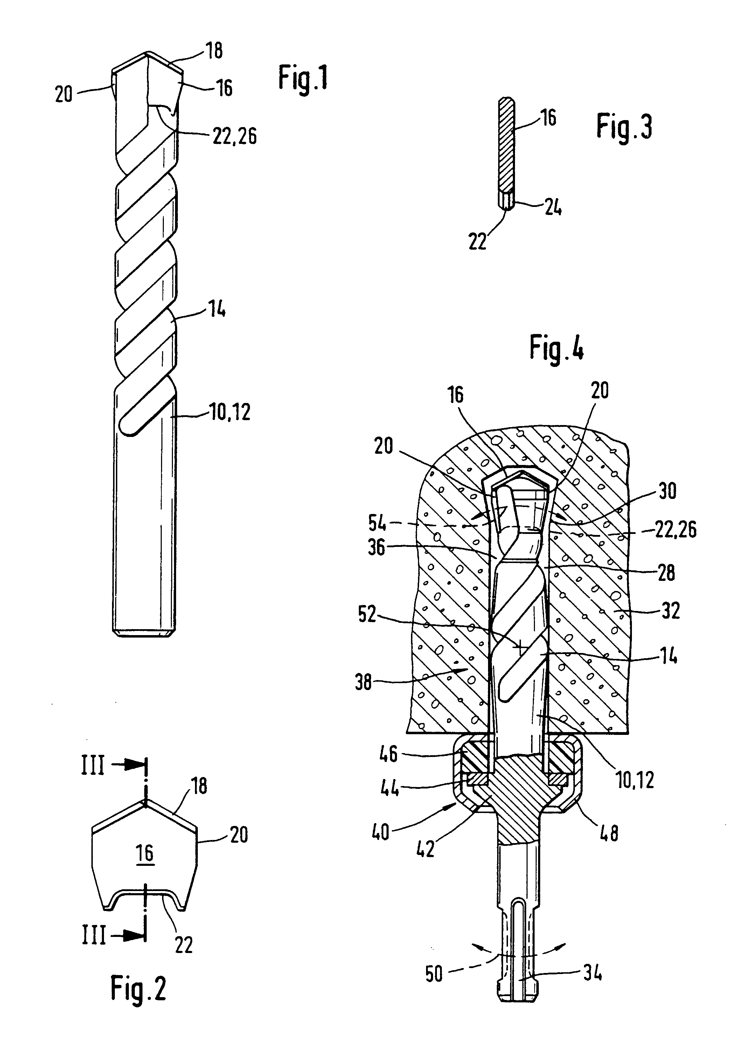

Der in Figur 1 dargestellte Steinbohrer 10 weist einen zylindrischen Bohrerschaft 12 mit wendelförmig umlaufenden Bohrmehlnuten 14 auf. Ein vorderes Ende des Bohrers weist einen Querschlitz auf, in den eine Hartmetallplatte 16 eingesetzt und durch Hartlöten mit dem Bohrerschaft 12 verbunden ist. Die Hartmetallplatte 16 ist in Figuren 2 und 3 in größerer Darstellung gezeigt.

Ein vorderer Rand 18 der Hartmetallplatte 16 verläuft dachförmig, er steht axial über den Bohrerschaft 12 vor. Seitenränder 20 der Hartmetallplatte 16 stehen seitlich über den Bohrerschaft 12 vor. Ein hinterer Rand 22 der Hartmetallplatte 16 ist konkav ausgebildet, er hat in etwa die Form eines quer zum Bohrerschaft 12 angeordneten Halbovals. Der hintere Rand 22 der Hartmetallplatte 16 ist mit Fasen 24 versehen (vgl. Figur 3).

Ein Grund 26 des Querschlitzes im vorderen Ende des Bohrerschaftes 12, in den die Hartmetallplatte 16 eingesetzt ist, ist komplementär zum hinteren Rand 22 der Hartmetallplatte 16 geformt. Der Grund 26 des Querschlitzes verläuft also konvex und hat ebenfalls näherungsweise die Form eines quer zum Bohrerschaft 12 angeordneten Halbovals. Der klaren Darstellung wegen ist das vordere Ende des Bohrerschaftes 12 in Figur 1 im Halbschnitt dargestellt, so daß die rechte Hälfte der Hartmetallplatte 16 in Ansicht und der Verlauf des Grundes 26 des Querschlitzes sichtbar sind.

Der in Figur 4 dargestellte Steinbohrer 10 ist zum Bohren zylindrischer Bohrlöcher in einem nicht dargestellten Mauerwerk beispielsweise aus Stein oder Beton mittels einer an sich bekannten Schlagbohrmaschine oder eines Bohrhammers vorgesehen.

Der in Figur 2 dargestellte Steinbohrer 10 ist zum Herstellen eines Bohrlochs 28 mit konischer Hinterschneidung 30 in einem Mauerwerk 32 beispielsweise aus Stein oder Beton vorgesehen. Der Steinbohrer 10 weist eine Bohrerschaft 12 mit wendelförmig verlaufenden Bohrmehlnuten 14 auf.

Ein hinteres Ende 34 des Bohrerschafts 12 ist zum Einsetzen in ein spezielles, nicht dargestelltes, an sich bekanntes Bohrfutter eines Bohrhammers ausgebildet.

Ein vorderes Ende des Bohrerschaftes 12 ist mit einem Querschlitz versehen, in den eine Hartmetallplatte 16 eingesetzt und durch Hartlöten befestigt ist. Die Hartmetallplatte 16 des Steinbohrers 10 in Figur 4 und der Querschlitz im Bohrerschaft 12, insbesondere der hintere Rand 22 der Hartmetallplatte 16 und der Grund 26 des Querschlitzes, sind übereinstimmend wie bei dem in Figur 1 dargestellten Steinbohrer 10 ausgebildet. Zur Vermeidung von Wiederholungen wird insoweit auf die entsprechenden Ausführungen zu Figuren 1 bis 3 verwiesen. Um die Hinterschneidung 30 ausreiben zu können, stehen die Seitenränder 20 der Hartmetallplatte 16 seitlich über den Bohrerschaft 12 über.

Hinter der Hartmetallplatte 16 weist der Bohrerschaft 12 eine Verjüngung 36 auf, die in eine Ausbauchung 38 übergeht, welche mit axialem Abstand von der Hartmetallplatte 16 am Bohrerschaft 12 ausgebildet ist. Ein Durchmesser der Ausbauchung 38 entspricht einer Breite der Hartmetallplatte 16 quer zum Bohrerschaft 12.

Mit axialem Abstand von der Ausbauchung 38 auf einer der Hartmetallplatte 16 abgewandten Seite weist der Steinbohrer 10 einen Tiefenanschlag 40 auf. Der Tiefenanschlag 40 umfasst einen mit dem Bohrerschaft 12 einstückigen Radialflansch 42, eine an ihm anliegende Lagerscheibe 44 und ein ringförmiges Dämpfungselement 46 aus elastischem Material. Der Radialflansch 42, die Lagerscheibe 44 und das Dämpfungselement 46 sind von einem hohlringförmigen Gehäuse 48 aus Blech umgeben, welches die Lagerscheibe 44 und das Dämpfungselement 46 am Radialflansch 42 hält.

Zur Herstellung des Bohrlochs 28 mit Hinterschneidung 30 wird zunächst ein zylindrisches Bohrloch 28 in an sich bekannter Weise gebohrt, bis der Tiefenanschlag 40 am Mauerwerk 32 zur Anlage kommt. Anschließend wird der Steinbohrer 10 an seinem hinteren Ende 34 seitlich verschwenkt, wie mit dem Strichlinien-Pfeil 50 angedeutet. Die Ausbauchung 38, welche am Umfang des Bohrlochs 28 anliegt, bildet ein Schwenklager mit einem Schwenkpunkt 52, um welches der Steinbohrer 10 verschwenkt. Durch das Verschwenken wird das vordere Ende des Bohrerschaftes 12 mit der Hartmetallplatte 16 seitlich ausgelenkt, wie mit dem Strichlinien-Pfeil 54 angedeutet. Der zur Seite verschwenkte Steinbohrer 10 wird in einer Art Rühr- oder Taumelbewegung im Kreis geführt, d.h. der Bohrerschaft 12 bewegt sich auf einer Kegelfläche, dessen Mittelpunkt mit dem Schwenkpunkt 52 übereinstimmt. Während des Verschwenkens und der Rührbewegung des Steinbohrers 10 wird dieser weiterhin rotierend angetrieben, so daß die Hinterschneidung 30 ausgerieben wird. Während des Ausreibens der Hinterschneidung 30 wird der Steinbohrer 10 mit seinem Tiefenanschlag 40 in Anlage am Mauerwerk 32 gehalten.

In Figur 4 ist der konkave hintere Rand 22 der Hartmetallplatte 16 und der konvexe Grund 26 des Querschlitzes mit einer Strichlinie angedeutet.

## Patentansprüche

1. Steinbohrer mit einem Bohrerschaft (12) und mit einer Hartmetallplatte (16), die in einen Querschlitz in einem vorderen Ende des Bohrerschaftes (12) eingesetzt und durch Hartlöten mit dem Bohrerschaft (12) verbunden ist, **dadurch gekennzeichnet,** daß ein dem vorderen Ende des Bohrerschaftes (12) abgewandter, hinterer Rand (22) der Hartmetallplatte (16) einen konkaven Verlauf aufweist, und daß ein Grund (26) des Querschlitzes im Bohrerschaft (12) komplementär zu dem konkaven, hinteren Rand (22) der Hartmetallplatte (16) ausgebildet ist.

2. Steinbohrer nach Anspruch 1, **dadurch gekennzeichnet**, daß der hintere Rand (22) der Hartmetallplatte (16) einen in etwa quer zum Bohrerschaft (12) verlaufenden mittleren Abschnitt aufweist, von dem aus der hintere Rand (22) der Hartmetallplatte (16) zu beiden Seiten des Steinbohrers (10) vom vorderen Ende des Bohrerschaftes (12) weg nach außen verläuft.

3. Steinbohrer nach Anspruch 2, **dadurch gekennzeichnet**, daß der hintere Rand (22) der Hartmetallplatte (16) in etwa die Form einer quer zum Bohrerschaft (12) angeordneten Halbellipse oder eines Halbovals aufweist.

4. Steinbohrer nach Anspruch 2, **dadurch gekennzeichnet**, daß der hintere Rand (22) der Hartmetallplatte (16) in etwa die Form eines Trapezes oder eines Poligonzuges aufweist.

5. Steinbohrer nach Anspruch 1, **dadurch gekennzeichnet**, daß die Hartmetallplatte (16) zumindest an einer Seite des Bohrerschaftes (12) übersteht.

6. Steinbohrer nach Anspruch 5, **dadurch gekennzeichnet,** daß der Bohrerschaft (12) eine Ausbauchung (38) zur Bildung eines Schwenklagers mit axialem Abstand von der Hartmetallplatte (16) aufweist.

7. Steinbohrer nach Anspruch 6, **dadurch gekennzeichnet**, daß der Bohrerschaft (12) eine Verjüngung (36) im Anschluß an seinen Querschlitz, in den die Hartmetallplatte (16) eingesetzt ist, aufweist.

8. Steinbohrer nach Anspruch 6, **dadurch gekennzeichnet**, daß der Bohrerschaft (12) einen seitlich abstehenden Tiefenanschlag (40) auf einer der Hartmetallplatte (16) abgewandten Seite der Ausbauchung (38) aufweist.

## Claims

1. Masonry drill bit having a drill bit shank (12) and having a carbide tip (16) inserted into a transverse slot in the forward end of the drill bit shank (12) and connected to the drill bit shank (12) by hard-soldering, **characterized in that** the rear edge (22) of the carbide tip (16), which rear edge (22) is remote from the forward end of the drill bit shank (12), has a concave configuration; and the base (26) of the transverse slot in the drill bit shank (12) is formed complementarily to the concave rear edge (22) of the carbide tip (16).

2. Masonry drill bit according to claim 1, **characterized in that** the rear edge (22) of the carbide tip (16) has a central portion that extends approximately transversely with respect to the drill bit shank (12), to the outside of which central portion, on both sides of the masonry drill bit (10), the rear edge (22) of the carbide tip (16) extends away from the forward end of the drill bit shank (12).

3. Masonry drill bit according to claim 2, **characterized in that** the rear edge (22) of the carbide tip (16) has approximately the shape of a semi-ellipse or semi-oval arranged transverse to the drill bit shank (12).

4. Masonry drill bit according to claim 2, **characterized in that** the rear edge (22) of the carbide tip (16) has approximately the shape of a trapezium or part of a polygon.

5. Masonry drill bit according to claim 1, **characterized in that** the carbide tip (16) projects at least on one side of the drill bit shank (12).

6. Masonry drill bit according to claim 5, **characterized in that** the drill bit shank (12) has a bulge (38) for formation of a pivot bearing spaced axially away from the carbide tip (16).

7. Masonry drill bit according to claim 6, **characterized in that** the drill bit shank (12) has a narrowing (36) adjacent to its transverse slot, in which slot the carbide tip (16) is inserted.

8. Masonry drill bit according to claim 6, **characterized in that** the drill bit shank (12) has a laterally projecting depth stop (40) on a side of the bulge (38) remote from the carbide tip (16).

## Revendications

1. Foret à pierre comprenant une tige (12) et un taillant en métal dur (16) inséré dans une fente transversale dans l'extrémité avant de la tige (12) et relié à la tige (12) par brasage fort, caractérisé en ce qu'un bord arrière (22) du taillant en métal dur (16) qui est opposé à l'extrémité avant de la tige (12) présente un tracé concave, et en ce qu'un fond (26) de la fente transversale dans la tige (12) est réalisé de façon complémentaire au bord arrière (22) concave du taillant en métal dur (16).

2. Foret à pierre selon la revendication 1, caractérisé en ce que le bord arrière (22) du taillant en métal dur (16) présente un segment central s'étendant approximativement transversalement à la tige (12), à partir duquel le bord arrière (22) du taillant en métal dur (16) part de l'extrémité avant de la tige (12) vers l'extérieur de part et d'autre du foret à pierre (10).

3. Foret à pierre selon la revendication 2, caractérisé en ce que le bord arrière (22) du taillant en métal dur (16) présente approximativement la forme d'une demi-ellipse ou d'un demi-ovale placé(e) perpendiculairement à la tige (12).

4. Foret à pierre selon la revendication 2, caractérisé en ce que le bord arrière (22) du taillant en métal dur (16) présente approximativement la forme d'un trapèze ou d'un polygone.

5. Foret à pierre selon la revendication 1, caractérisé en ce que le taillant en métal dur (16) dépasse au moins d'un côté de la tige (12).

6. Foret à pierre selon la revendication 5, caractérisé en ce que la tige (12) présente un évasement (38) destiné à former un palier oscillant à une distance axiale du taillant en métal dur (16).

7. Foret à pierre selon la revendication 6, caractérisé en ce que la tige (12) présente un rétrécissement (36) dans le prolongement de sa fente transversale dans laquelle est logé le taillant en métal dur (16).

8. Foret à pierre selon la revendication 6, caractérisé en ce que la tige (12) présente une butée de profondeur (40) faisant saillie latéralement et située sur un côté de l'évasement (38) qui est opposé au taillant en métal dur (16)
